# FASCICULE DE BREVET EUROPEEN

(11) **EP 2 422 031 B1**
(45) Date de publication et mention de la délivrance du brevet: **26.02.2014**
(21) Numéro de dépôt: 10723713.3
(22) Date de dépôt: 20.04.2010
(51) Int. Cl.: B60L 3/00, E05B 47/00, B60L 11/18

(54) **DISPOSITIF POUR ASSURER LE VERROUILLAGE/DEVERROUILLAGE D'UN ELEMENT SUR ET HORS D'UNE STRUCTURE**
VORRICHTUNG ZUR SICHERSTELLUNG DES VERRIEGELNS/ENTRIEGELNS EINES ELEMENTES AN ODER VON EINER STRUKTUR
DEVICE TO PROVIDE SECURITY OF THE LOCKING/UNLOCKING OF AN ELEMENT ON AND OFF A STRUCTURE

(30) Priorité: 20.04.2009 FR 0952570
(43) Date de publication de la demande: 29.02.2012
(73) Titulaire: Renault S.A.S., 92100 Boulogne-Billancourt (FR)
(72) Inventeur: ECOCHARD, Michel, F-69970 Chaponnay (FR)
(86) Numéro de dépôt international: PCT/FR2010/050761
(87) Numéro de publication internationale: WO 2010/122267

(56) Documents cités:
- EP-A2- 0 976 901
- DE-U1-202007 013 514
- US-A- 3 102 411

## Description

### DOMAINE DE L'INVENTION

L'invention concerne un dispositif apte à assurer le verrouillage et le déverrouillage d'un élément muni d'un verrou respectivement sur et hors d'une structure munie d'un logement propre à recevoir et à coopérer avec la partie active dudit verrou.

L'invention s'inscrit dans le cadre plus général d'une installation partiellement automatisée destinée à permettre l'échange standard d'un élément ou d'un composant déterminé au sein d'une structure plus importante. Elle vise plus particulièrement le cadre de l'échange standard de batteries de véhicules automobiles à énergie purement électrique et non pas thermique.

### ETAT ANTERIEUR DE LA TECHNIQUE - PROBLEME POSE

La raréfaction du pétrole d'une part et la volonté politique de s'inscrire dans une démarche de sauvegarde de l'environnement d'autre part, ont conduit les constructeurs automobiles à souhaiter remplacer l'énergie thermique permettant la propulsion des véhicules par l'énergie électrique. Or, l'une des difficultés majeure auxquelles ont à faire face lesdits constructeurs, réside dans l'autonomie limitée des batteries électriques mises en oeuvre à ce jour, outre leur durée de charge particulièrement longue.

Ainsi, afin de s'affranchir de cette difficulté, l'idée a germé de non pas procéder à la recharge de la ou desdites batteries au sein du véhicule dans lequel elles sont embarquées, mais, lorsque la batterie est épuisée ou sensiblement épuisée, à procéder à son échange standard au sein de stations dédiées à cet effet, lesdites stations assurant corollairement la recharge des batteries ainsi remplacées.

Cependant, eu égard au poids desdites batteries, typiquement quelques centaines de kilogrammes, il convient d'assurer une fixation efficace de celle-ci au sein du véhicule et donc, dans le cadre du principe rappelé précédemment, on doit réaliser l'extraction de la ou des batteries dudit véhicule et la mise en place d'une batterie chargée en s'assurant de l'efficacité de la fixation ou au contraire du déverrouillage, et ce dans un temps relativement limité puisqu'aussi bien, pour qu'une telle solution générale soit viable, il est envisagé une durée typique de changement standard d'une telle batterie inférieure à cinq minutes.

Il se pose donc le problème d'assurer en ce laps de temps réduit le déverrouillage de la batterie usée et le verrouillage d'une batterie chargée, en respectant le cahier des charges drastique de fixation de ladite batterie au sein du véhicule. On conçoit en effet aisément, qu'en raison du poids important de ces batteries, ces mécanismes de verrouillage et déverrouillage sont déterminants.

L'objet de la présente invention est de proposer un dispositif apte à assurer cette fonction de verrouillage/déverrouillage d'une batterie au sein d'une automobile et de manière plus générale, de tout élément destiné à être solidarisé ou désolidarisé d'une structure.

A ce jour, on ne connaît pas un tel dispositif.

Le document DE 20 2007013514U1, qui représente l'état de la technique le plus proche, divulgue un dispositif de verrouillage d'une porte de camping-car.

### EXPOSE DE L'INVENTION

La présente invention vise donc un dispositif pour assurer le verrouillage/déverrouillage d'un élément muni d'un verrou sur/hors d'une structure munie d'un logement apte à recevoir la partie active dudit verrou. La présente invention vise donc un dispositif permettant d'actionner un verrou capable de fixer un élément sur une structure.

Ce dispositif comprend :
- un fourreau cylindrique recevant coaxialement une première tige creuse mobile en rotation par rapport à l'axe de révolution dudit fourreau, et dont l'extrémité supérieure est pourvue d'un moyen apte à coopérer avec le verrou dudit élément, et plus particulièrement avec les pièces d'accrochage inférieur dudit verrou, et une seconde tige coaxiale interne par rapport à la première tige creuse, mobile en translation et en rotation, respectivement selon et par rapport à l'axe de révolution dudit fourreau, et dont l'extrémité supérieure est munie d'un moyen apte à coopérer avec la partie active du verrou de telle sorte à pouvoir actionner celle-ci en position opérationnelle de verrouillage ou de déverrouillage, et typiquement à lui imprimer un mouvement de rotation ;
- des moyens pour assurer la rotation de chacune des deux tiges par rapport à l'axe de révolution du fourreau, indépendamment l'une de l'autre ;
- et des moyens pour assurer le déplacement en translation de la seconde tige.

Selon l'invention, les moyens de rotation des deux tiges sont chacun constitués d'une biellette, chacune étant actionnée par un moteur électrique, et couplée à la tige considérée, les deux biellettes étant sensiblement parallèles entre elles et orientées selon deux plans sensiblement perpendiculaires par rapport à l'axe de révolution du fourreau. Ainsi, il est possible d'imprimer des mouvements indépendants à chacune des biellettes et par suite aux tiges auxquelles elles sont couplées.

En d'autres termes, l'invention consiste à intégrer au sein d'un même dispositif les différentes fonctions nécessaires pour actionner un verrou et plus précisément pour assurer le verrouillage et le déverrouillage d'un verrou, tenant compte des spécificités du contexte dans lequel s'inscrivent ces opérations. On obtient ainsi un dispositif qui est amovible du verrou, capable de coopérer avec un verrou une fois placé dans la position adéquate grâce à des moyens de coopération avec des pièces d'accrochage inférieur du verrou.

Selon une autre caractéristique de l'invention, le couplage des biellettes sur les tiges respectives peut être réalisé à l'intérieur du fourreau, celui-ci étant pourvu à cet effet d'une ouverture au niveau de sa paroi latérale, de dimensions adaptées au débattement souhaité des biellettes et corollairement à l'angle de rotation souhaité des tiges.

Selon une autre caractéristique de l'invention, la translation de la seconde tige selon l'axe de révolution du fourreau, peut être assurée au moyen d'un poussoir colinéaire avec la tige en question, actionné par une came à axe de rotation perpendiculaire à la direction de translation souhaitée, elle-même mue en rotation au moyen d'un moteur électrique. Ce mouvement de translation de la seconde tige peut alors être imprimé indépendamment des mouvements qui sont imprimés aux biellettes s'étendant dans les plans perpendiculaires par rapport à l'axe de révolution du fourreau. Ce mouvement en translation devant exercer une pression importante sur le verrou via la seconde tige, le moteur électrique choisi est alors plus puissant que les moteurs électriques actionnant les biellettes s'étendant dans les plans perpendiculaires par rapport à l'axe de révolution du fourreau.

L'indépendance de tous les mouvements permet de dimensionner au plus juste de leur utilisation, chacun des moteurs devant imprimer les mouvements, ce qui concoure à la réduction du prix du dispositif pour assurer le verrouillage/déverrouillage d'un verrou.

### BREVE DESCRIPTION DES FIGURES

La manière dont l'invention peut être réalisée et les avantages qui en découlent ressortiront mieux de l'exemple de réalisation qui suit, donné à titre indicatif et non limitatif à l'appui des figures annexées.
La figure 1 est une représentation schématique en perspective du dispositif conforme à l'invention, dont la figure 2 est une vue de dessus et la figure 3 une vue en section sagittale.
Les figures 4a et 4b illustrent schématiquement deux positions de la seconde tige du dispositif conforme à l'invention, respectivement en position escamotée et en position sortie, et donc opérationnelle.
La figure 5 est une vue schématique en perspective illustrant de manière plus détaillée l'extrémité supérieure du dispositif de l'invention.
Les figures 6, 7 et 8 sont des représentations schématiques en perspective illustrant la coopération du dispositif de l'invention avec un type de verrou dont est munie la structure dont on souhaite assurer le verrouillage/déverrouillage.

### MODE DE REALISATION DE L'INVENTION

L'invention est plus particulièrement décrite en relation avec un dispositif du type en question mis en oeuvre dans le cadre du verrouillage et du déverrouillage de batteries de véhicules automobiles à propulsion électrique.

Il est cependant bien entendu que l'invention ne saurait se limiter à cette seule application.

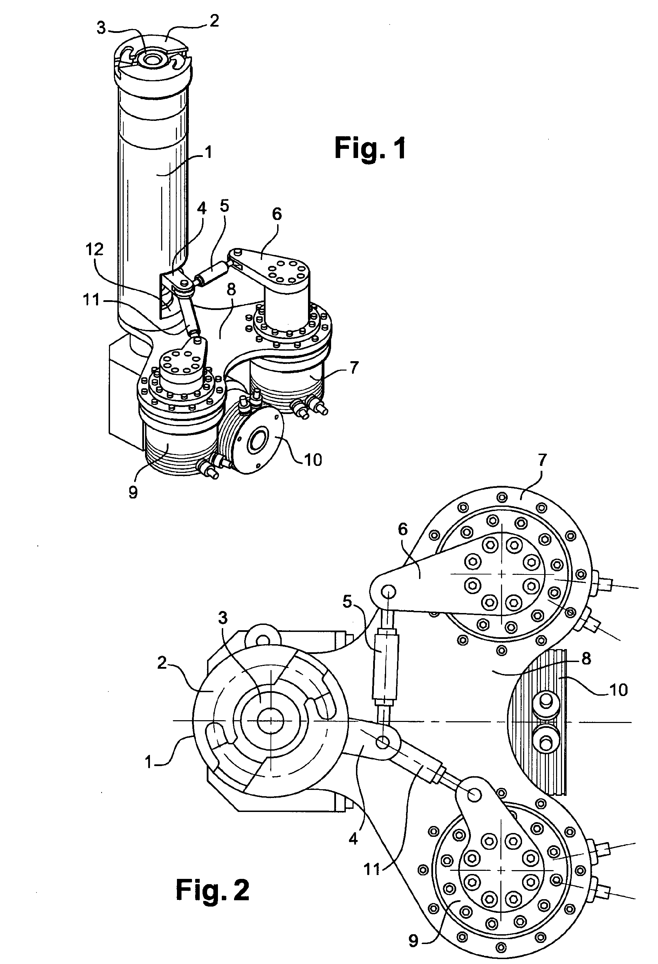

On a donc représenté en relation avec les figures 1 à 3 diverses vues explicatives du dispositif conforme à l'invention.

Fondamentalement, celui-ci se compose d'un fourreau cylindrique 1, rigide, dont la base est fixée à un socle 8, lui-même solidarisé par exemple à un dispositif de levage pour permettre la montée et la descente du fourreau 1, afin respectivement de venir prendre en charge et de déverrouiller la batterie hors du véhicule automobile ou au contraire, de prendre en charge une batterie rechargée ou neuve et de la mettre en place au niveau d'un logement prévu à cet effet au sein dudit véhicule automobile.

Ce fourreau **1** comporte à son extrémité supérieure un organe rotatif **2**, pourvu de moyens **30**, en l'espèce au nombre de deux diamétralement opposés, destinés à coopérer avec un organe correspondant d'un verrou dont est munie la batterie que l'on souhaite ainsi manipuler. Au centre de cet organe **2**, est situé, donc également au niveau de l'extrémité supérieure du fourreau **1**, un autre organe **3** susceptible de mouvement de translation tel que cela sera décrit plus en détail ultérieurement.

Au voisinage de la base inférieure du fourreau **1** et solidarisés à la platine **8**, sont situés deux moteurs électriques, respectivement **7** et **9**, actionnant l'ensemble de biellettes **4**, **5**, **6** pour le moteur 7 et **11, 13** pour le moteur **9**, dont partie d'entre elles pénètrent à l'intérieur du fourreau **1** au niveau d'une ouverture **12** pratiquée dans la paroi latérale définissant ledit fourreau, et dont le fonctionnement et l'architecture seront décrits plus en détail ultérieurement.

Enfin, la base comporte également un autre moteur électrique **10**, à axe fonctionnel orienté perpendiculairement par rapport aux axes des moteurs **7** et **9**. Là encore, ces différentes caractéristiques apparaîtront mieux à l'analyse des figures qui suivent.

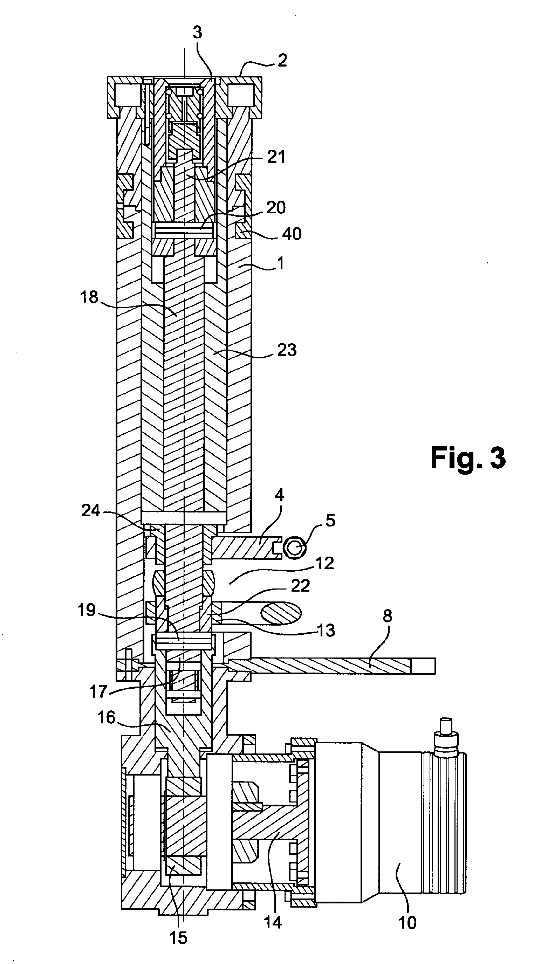

En se référant plus particulièrement à la figure 3, le fourreau **1** comporte une première tige **23**, creuse, coaxiale avec ledit fourreau 1. Cette tige **23** est solidarisée au niveau de son extrémité supérieure à l'organe **2** de coopération avec le verrou de la batterie et coopère au niveau de son extrémité inférieure avec la biellette **4** au niveau d'un manchon **24**. De fait, la biellette **4** assure la rotation de la tige **23** par rapport à l'axe de révolution du fourreau, sous l'action du moteur **7** selon un débattement limité, et induit corollairement la rotation de l'organe **2**.

En outre, coaxialement par rapport à la tige creuse **23**, le dispositif comporte une autre tige **18**. Cette tige **18**, donc centrale, est également susceptible de rotation par rapport à l'axe de révolution du fourreau **1** par le biais de la biellette **13** associée à la biellette **11** et du moteur **9**. A cet effet, elle est connectée à ladite biellette **13** au moyen d'un manchon **22**, l'ensemble étant positionné de manière sous-jacente par rapport à la biellette **4** et au manchon **24**, tel qu'on peut l'observer sur la figure 3.

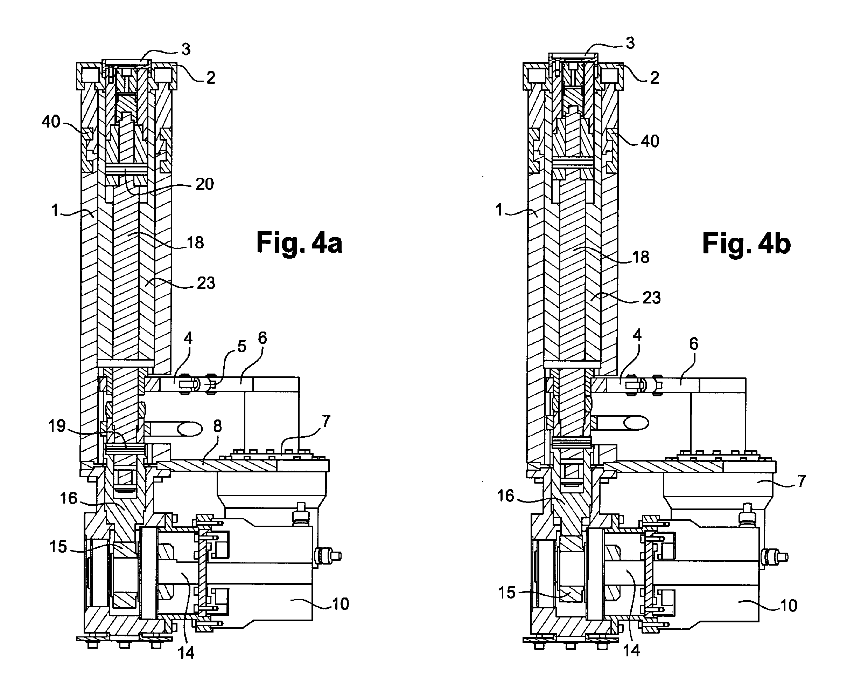

Au moyen d'une butée à billes et de roulements, la tige **18** est également soumise à l'action d'un piston **16**, sous-jacent, intégré dans le fourreau, et susceptible d'être mu en translation le long de l'axe de révolution du fourreau par coopération avec une came **15**. Cette dernière est actionnée en rotation par l'axe **14** du moteur **10**, l'axe **14** étant en l'espèce perpendiculaire à l'axe de révolution du fourreau **1**. Ce piston **16** est donc susceptible de faire mouvoir la tige **18** en translation, et donc corollairement, à induire la sortie de l'organe **3** hors du fourreau, tel qu'on peut par exemple l'observer sur la figure 4b. En d'autres termes, la tige **18** est susceptible d'être animée à la fois d'un mouvement de translation et d'un mouvement de rotation, ces deux mouvements étant indépendants puisque générés par deux moteurs différents, en l'espèce les moteurs **9** et **10**.

En outre, afin de permettre le débattement relatif de la biellette **13** hors du plan dans lequel elle s'étend en suite du mouvement de translation opéré sur la tige **18**, celle-ci est montée sur rotule permettant ainsi un débattement compatible avec la translation que l'on souhaite imprimer à l'organe **3**, typiquement compris entre 5 et 10 mm.

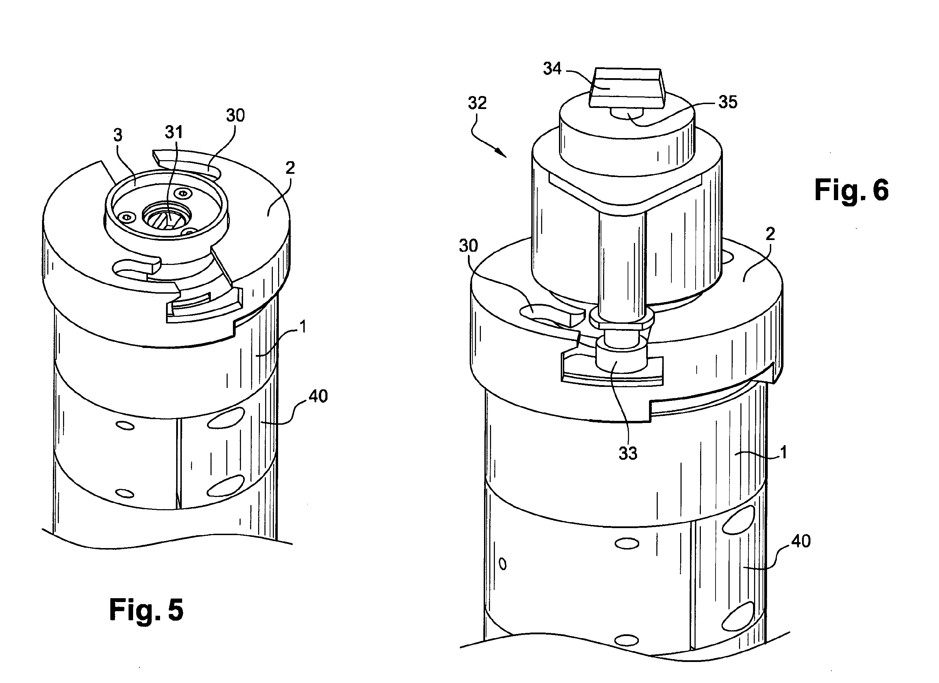

On a représenté en relation avec la figure 5 une vue plus détaillée de l'extrémité supérieure du fourreau. On observe notamment que l'organe 2 de coopération avec le verrou présente deux lumières **30** destinées à coopérer avec des saillies ou tétons **33** émanant du verrou **32** dont la batterie est munie.

L'organe **3** comporte en son centre une empreinte **31** destinée à coopérer avec une saillie complémentaire (non représentée) intégrée au sein du verrou **32** et se prolongeant par un axe **35** surmonté de la partie active **34** du verrou. Ainsi, la rotation de l'organe **3** induit la rotation de l'empreinte **31** et corollairement celle de la partie active **34**.

La présence de deux lumières **30** destinées à coopérer avec des saillies ou tétons **33** émanant du verrou **32** de la batterie permettent d'opérer une retenue de la batterie lorsque le piston **16** déplace la tige **18** en translation pour induire la sortie de l'organe **3** hors du fourreau. Il est ainsi possible de mettre en tension la batterie sur ses fixations du véhicule comme il sera expliqué lors de la description du principe de fonctionnement du dispositif.

Il va être décrit plus en détail le principe de fonctionnement du dispositif conforme à l'invention en relation avec les figures 4a, 4b et 6 à 8.

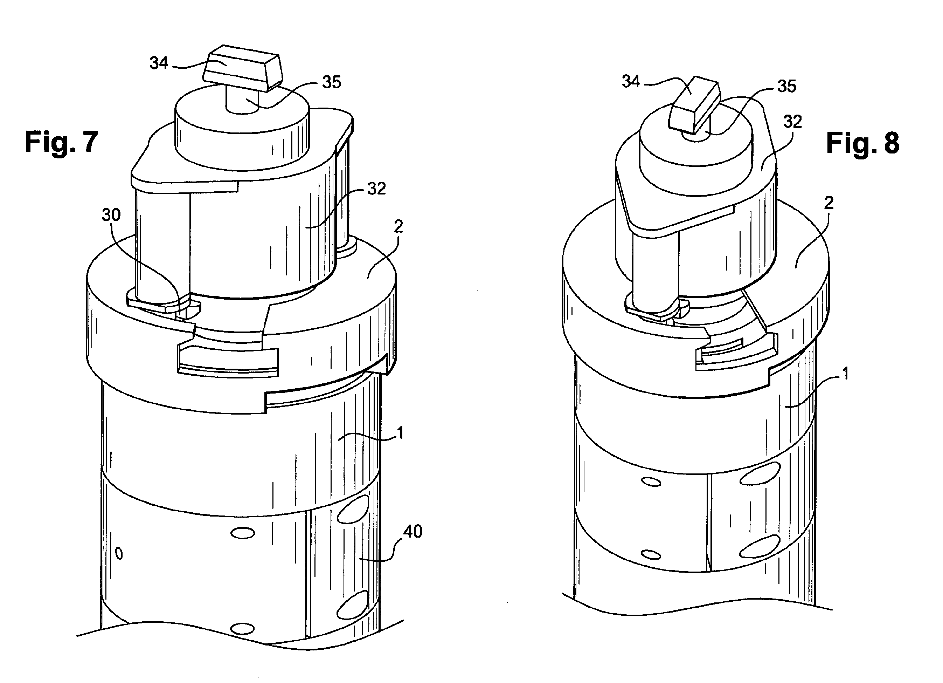

Au sein de la figure 4a, la tige **18** est en zone inférieure de sorte que l'organe **3** affleure sensiblement avec la partie supérieure de l'organe **2**. Dans cette configuration et lorsque le dispositif de l'invention est en contact avec le verrou **32** de la batterie (tel que représenté à la figure 6), on imprime alors à la tige **23** une rotation propre à engendrer la rotation de l'organe **2** et corollairement, la coopération des lumières **30** avec les tétons **33** du verrou. On se retrouve alors au niveau de la configuration représentée à la figure 7.

Le verrou étant ainsi amarré au dispositif de l'invention, on active le poussoir du piston **16** par le biais du moteur **10**, engendrant la poussée de l'organe **3**, induisant la saillie plus prononcée de la partie active **34** du verrou **32**. On peut faire en sorte d'appliquer une pression supérieure, à la pression nominale permettant la saillie de la partie active **34** du verrou **32** pour que celle-ci atteigne l'extrémité de sa course. On imprime alors une rotation à ladite tige **18** par le biais du moteur **9** et des biellettes **11** et **13** assurant un quart de tour à la partie active **34**, venant alors coopérer avec un logement prévu à cet effet au sein du véhicule automobile. Le mouvement de verrouillage se poursuit en redescendant la partie active **34** au moyen du moteur **10** et des organes associés, ce qui assure l'appui de ladite partie **34** dans son logement ménagé au sein du véhicule. La batterie est alors mise en tension sur le véhicule car une contrainte résiduelle reste présente dans l'assemblage, ce qui permet d'assurer une tenue améliorée de la batterie qui peut peser plusieurs centaines de kilos.

Il convient de préciser que dans l'exemple décrit, par défaut, la partie active **34** du verrou **32** est précontrainte, par exemple au moyen d'un ressort, de sorte qu'elle se trouve en position basse tel qu'illustré à la figure 6. On pourra choisir d'exercer une pression comprise entre deux et cinq fois la pression nominale permettant de comprimer les moyens de précontrainte, par exemple les ressorts.

Le dispositif de verrouillage/déverrouillage de l'invention est alors libéré du verrou par nouvelle rotation, en sens inverse, de l'organe **2**, au moyen des éléments déjà décrits précédemment.

Lorsque le verrouillage est ainsi réalisé, on procède en sens inverse pour libérer le dispositif du verrou **32** et corollairement de la batterie.

Le déverrouillage de la batterie reprend le même principe, en inversant les différentes phases décrites précédemment.

On conçoit tout l'intérêt du dispositif de l'invention de par la facilité de mise en place et de réalisation des fonctions de verrouillage et déverrouillage.

Au demeurant, il est possible d'adapter différents types d'organes 2 et 3 à l'extrémité supérieure du fourreau, celui-ci étant avantageusement muni d'une bride 40 assemblant des éléments supérieurs propres à coopérer avec un verrou spécifique avec la partie inférieure susceptible ainsi d'être standardisée.

## Revendications

1. Dispositif pour assurer le verrouillage/déverrouillage d'un élément muni d'un verrou (32) sur/hors d'une structure munie d'un logement apte à recevoir la partie active dudit verrou, comprenant :
- un fourreau cylindrique (1) recevant coaxialement une première tige creuse (23) mobile en rotation par rapport à l'axe de révolution dudit fourreau (1), et dont l'extrémité supérieure est pourvue d'un premier moyen (2) apte à coopérer avec le verrou (32) dudit élément, et une seconde tige (18), coaxiale et interne par rapport à la première tige creuse (23), mobile en translation et en rotation, respectivement selon et par rapport à l'axe de révolution dudit fourreau, et dont l'extrémité supérieure est munie d'un deuxième moyen (3) apte à coopérer avec la partie active du verrou (32) de telle sorte à pouvoir actionner celle-ci en position opérationnelle de verrouillage ou de déverrouillage ;
- des troisièmes moyens (4, 5, 6, 7, 9, 11, 13) pour assurer la rotation de chacune des deux tiges (18, 23) par rapport à l'axe de révolution du fourreau, indépendamment l'une de l'autre ;
- et des quatrièmes moyens (10, 14, 15, 16) pour assurer le déplacement en translation de la seconde tige (18) ;
- le cas échéant la partie active (34) du verrou (32) subit un mouvement de rotation sous l'action dudit deuxième moyen (3) ;
le dispositif étant **caractérisé en ce que** :
- les troisièmes moyens assurant la rotation des deux tiges (18, 23) sont chacun constitués d'une biellette, actionnée par un moteur électrique (7, 9), et couplée à la tige considérée, les deux biellettes étant sensiblement parallèles entre elles et orientées selon deux plans sensiblement perpendiculaires par rapport à l'axe de révolution du fourreau.

2. Dispositif pour assurer le verrouillage/déverrouillage d'un élément muni d'un verrou (32) selon la revendication 1, ***caractérisé* en ce que** le couplage des biellettes sur les tiges respectives (18, 23) est réalisé à l'intérieur du fourreau, celui-ci étant pourvu à cet effet d'une ouverture (12) ménagée au niveau de sa paroi latérale, de dimensions adaptées au débattement souhaité des biellettes et corollairement à l'angle de rotation souhaité des tiges.

3. Dispositif pour assurer le verrouillage/déverrouillage d'un élément muni d'un verrou (32) selon l'une des revendications 1 à 2, ***caractérisé* en ce que** la translation de la seconde tige (18) selon l'axe de révolution du fourreau (1) est assurée au moyen d'un poussoir ou piston (16) colinéaire avec la tige en question, actionné par une came (15) à axe de rotation perpendiculaire à la direction de translation souhaitée, elle-même mue en rotation au moyen d'un moteur électrique (10).

4. Dispositif pour assurer le verrouillage/déverrouillage d'une batterie au sein et hors d'un véhicule automobile selon l'une quelconque des revendications 1 à 3 et batterie, **caracterisé en ce que** ladite batterie est munie d'un verrou (32) munie d'une partie active (34) apte à coopérer avec un logement prévu à cet effet au sein dudit véhicule.

## Patentansprüche

1. Vorrichtung zur Gewährleistung der Verriegelung/Entriegelung eines mit einem Riegel (32) versehenen Elements auf/außerhalb einer Struktur, die mit einer Aufnahme versehen ist, die den aktiven Teil des Riegels aufnehmen kann, die enthält:
- ein zylindrisches Mantelrohr (1), das koaxial eine erste Hohlstange (23), die bezüglich der Drehachse des Mantelrohrs (1) drehbeweglich ist, und deren oberes Ende mit einer ersten Einrichtung (2) versehen ist, die mit dem Riegel (32) des Elements zusammenwirken kann, und eine zweite Stange (18) aufnimmt, die koaxial und innen bezüglich der ersten Hohlstange (23) angeordnet, translations- und drehbeweglich gemäß bzw. bezüglich der Drehachse des Mantelrohrs ist, und deren oberes Ende mit einer zweiten Einrichtung (3) versehen ist, die mit dem aktiven Teil des Riegels (32) zusammenwirken kann, um diesen in der Betriebsstellung der Verriegelung oder der Entriegelung betätigen zu können;
- dritte Einrichtungen (4, 5, 6, 7, 9, 11, 13), um die Drehung jeder der zwei Stangen (18, 23) bezüglich der Drehachse des Mantelrohrs unabhängig voneinander zu gewährleisten;
- und vierte Einrichtungen (10, 14, 15, 16), um die Translationsverschiebung der zweiten Stange (18) zu gewährleisten;
- wobei der aktive Teil (34) des Riegels (32) gegebenenfalls eine Drehbewegung unter der Einwirkung der zweiten Einrichtung (3) erfährt;
wobei die Vorrichtung **dadurch gekennzeichnet ist, dass**:
- die die Drehung der zwei Stangen (18, 23) gewährleistenden dritten Einrichtungen je aus einer Verbindungsstange bestehen, die von einem Elektromotor (7, 9) betätigt wird und mit der betreffenden Stange gekoppelt ist, wobei die zwei Verbindungsstangen im Wesentlichen parallel zueinander und gemäß zwei im Wesentlichen lotrechten Ebenen bezüglich der Drehachse des Mantelrohrs ausgerichtet sind.

2. Vorrichtung zur Gewährleistung der Verriegelung/Entriegelung eines mit einem Riegel (32) versehenen Elements nach Anspruch 1, **dadurch gekennzeichnet, dass** die Kopplung der Verbindungsstangen mit den jeweiligen Stangen (18, 23) innerhalb des Mantelrohrs ausgeführt wird, wobei dieses zu diesem Zweck mit einer Öffnung (12) versehen ist, die im Bereich seiner Seitenwand ausgespart ist, mit Abmessungen, die an den gewünschten Bewegungsraum der Verbindungsstangen und gleichzeitig den gewünschten Drehwinkel der Stangen angepasst sind.

3. Vorrichtung zur Gewährleistung der Verriegelung/Entriegelung eines mit einem Riegel (32) versehenen Elements nach einem der Ansprüche 1 bis 2, **dadurch gekennzeichnet, dass** die Translationsbewegung der zweiten Stange (18) gemäß der Drehachse des Mantelrohrs (1) mittels eines Drückers oder Kolbens (16) kolinear zur betreffenden Stange gewährleistet wird, der von einer Nocke (15) mit einer Drehachse lotrecht zur gewünschten Translationsrichtung betätigt wird, die selbst mittels eines Elektromotors (10) in Drehung versetzt wird.

4. Vorrichtung zur Gewährleistung der Verriegelung/Entriegelung einer Batterie innerhalb und außerhalb eines Kraftfahrzeugs nach einem der Ansprüche 1 bis 3 und Batterie, **dadurch gekennzeichnet, dass** die Batterie mit einem Riegel (32) versehen ist, der mit einem aktiven Teil (34) versehen ist, der mit einer zu diesem Zweck innerhalb des Fahrzeugs vorgesehenen Aufnahme zusammenwirken kann.

## Claims

1. A device for locking/unlocking an element furnished with a latch (32) on/off a structure furnished with a housing capable of receiving the active portion of said latch, comprising:
- a cylindrical sheath (1) receiving coaxially a first hollow rod (23) that can rotate relative to the axis of revolution of said sheath (1) and the top end of which is provided with a first means (2) capable of interacting with the latch (32) of said element, and a second rod (18), coaxial to and on the inside of the first hollow rod (23), that can move in translation and in rotation, respectively along and relative to the axis of revolution of said sheath, and the top end of which is furnished with a second means (3) capable of interacting with the active portion of the latch (32) so as to be able to actuate the latter in an operational position of locking or of unlocking;
- third means (4, 5, 6, 7, 9, 11, 13) for ensuring the rotation of each of the two rods (18, 23) relative to the axis of revolution of the sheath, independently of one another;
- and fourth means (10, 14, 15, 16) for ensuring the movement in translation of the second rod (18);
the device being **characterized in that**:
- if necessary, the active portion (34) of the latch (32) sustains a rotary movement under the action of said second means (3);
- the third means ensuring the rotation of the two rods (18, 23) each consist of a link arm, actuated by an electric motor (7, 9), and coupled to the rod in question, the two link arms being substantially parallel with one another and oriented on two planes substantially perpendicular to the axis of revolution of the sheath.

2. Device for locking/unlocking an element furnished with a latch (32) according to Claim 1, **characterized in that** the coupling of the link arms to the respective rods (18, 23) is carried out inside the sheath, the latter being provided for this purpose with an opening (12) arranged in its side wall, of dimensions suitable for the desired clearance of the link arms and consequently to the desired angle of rotation of the rods.

3. Device for locking/unlocking an element furnished with a latch (32) according to either of Claims 1 and 2, **characterized in that** the translation of the second rod (18) along the axis of revolution of the sheath (1) is provided by means of a pushing element or piston (16) colinear with the rod in question, actuated by a cam (15) with an axis of rotation perpendicular to the desired direction of translation, itself rotated by means of an electric motor (10).

4. Device for locking/unlocking a battery within and out of a motor vehicle according to any one of Claims 1 to 3 and battery, **characterized in that** said battery is furnished with a latch (32) furnished with an active portion (34) capable of interacting with a housing provided for this purpose within said vehicle.
